# EUROPEAN PATENT SPECIFICATION

(11) **EP 1 544 523 B1**
(45) Date of publication and mention of the grant of the patent: **09.05.2007**
(21) Application number: 04380237.0
(22) Date of filing: 25.11.2004
(51) Int. Cl.: F16K 11/044, F16K 31/04

(54) **Interchangeable three-way valve for a domestic boiler**
Auswechselbares Dreiwegeventil für einen Hausheizungskessel
Valve à trois voies interchangeables pour une chaudière domestique

(30) Priority: 17.12.2003 ES 200302906 U
(43) Date of publication of application: 22.06.2005
(73) Proprietor: ORKLI, S. COOP., 20240 Ordizia (Gipuzkoa) (ES)
(72) Inventor: Mendia Urkiola, José Ramon, 20200 Beasain (Gipuzkoa) (ES)
(74) Representative: Fernandez Guzman, Juan

(56) References cited:
- EP-A- 0 679 821
- EP-A- 1 321 700
- DE-U1- 20 103 992
- US-A- 4 074 700

## Description

The present invention relates to a three-way valve for switching the heating and sanitary hot water circuits of a domestic boiler, with a lift plug member type that is operated linearly by a motor or electromagnet between two valve seats.

### Prior art

Hydraulic assemblies for domestic water boilers are known, that comprise at least the water pump, the sanitary hot water heat exchanger and a three-way valve for switching over the two hot water circuits. An example of hydraulic assembly is disclosed in **EP-953808-A**, wherein a three-way switching valve is included with a valve housing body built externally into a hydraulic block and made up of three protruding ducts for connecting the pump, the heat exchanger and the heating circuit. This valve body model as well as the one disclosed in **EP-679821-A** are designed specifically for a hydraulic block of a specific boiler model. In addition, it has the drawback of the economical cost of the valve body, and furthermore for its replacement it is necessary to carry out the work of mounting for the new valve with its external connecting conducts.

The three-way valve disclosed in the above-mentioned document EP-679821 is the plug member type which lifts under the action of a motor, and slides between the two transverse valve seats arranged on either side of the single incoming way from the boiler heater, switching over the other two water flow outlet ways from the valve to the heating or sanitary water circuits. The opening of the sanitary water circuit has to be quick as the user requires the supply of hot water as soon as possible. Furthermore, an overly quick changeover would give rise to a water ram in the circuit shut off. This known valve is operated by a step motor to achieve a switching time of 0.5 to 2 seconds in order to prevent both the water ram and a loss of load inside the valve. The plug member of this valve is made of flexible material and both the closing and the opening force against the seat is exerted by the actual step motor.

**DE-U-20103992** discloses a valve supplement operated by a motor which has a body in the form of a cylindrical cartridge with two peripheral sealing rings for insertion in a housing cavity in a hydraulic body of a boiler. This valve supplement has a single way in its superficial perimeter in the form of an annular opening and a single valve seat, so machining is required at the base of the cavity of the second valve seat and of two outgoing ways.

EP-A-1321700 discloses an interchangeable three-way valve for a domestic boiler, serving as the basis for the preamble of claim 1.

### Disclosure of the invention

The object of the invention is a three-way valve, operated by a motor for switching over the two hot water circuits in a domestic boiler, able to be built into a housing in the hydraulic block of the boiler, for which purpose the cylindrical body of the valve is provided with peripheral sealing rings and at least two of the three ways being in the form of annular superficial openings for their alignment and direct connection with two respective ducts in a housing cavity of the hydraulic block.

An advantage of the switching valve according to the invention is that different hydraulic blocks of different boilers may be equipped with it, irrespective of the angular position that may be taken up by the hydraulic valve inserted in a single sized housing of different hydraulic blocks, since the latter only have two radial holes machined at a different depth matching up with these annular openings, and a single axial hole in the bottom of the cavity, for connection to the three valve body openings by simply inserting the valve body, with no particular angular orientation.

A further objective achieved by the switching valve is an arrangement of a motor-operated linearly lifting valve member effecting a constant stroke in a pre-set time, both parameters being the same value on all the valves, whereby the two valve seats are formed in the actual body of the valve. The cylindrical body of the valve, the three valve openings and the two valve seats being constructed on transverse planes in relation to the stem, said switching parameters are not affected either by the dimensions of the housing cavity in the boiler block or by the assembly position taken up by the valve body in the axial direction or in the angular direction.

The plug member is made of a metal alloy, and its sealing surface against the respective valve body has a special configuration in order that, in cooperation both with a coil compression spring that presses on the plug member, and with the valve stem guide means, the plug member may lift from its seat quickly in its lift movement, without the opposition of a force of adhesion to the valve seat.

According to the invention, the hollow cylindrical body and the internal parts of the valve, are designed so that the assembly of the valve during its manufacture may be economical, the valve body having thereof a large-diameter axial hole in the opposite end to the motor coupling, which forms the hole through which the internal organs of the valve are inserted, along with one of the water inlet ways.

### Description of the drawings

Figure 1 is a view of a three-way valve for changing over two water circuits in a boiler.
Figure 2 is a sectional view of the valve in figure 1, according to the centre line II-II.

### Description of a preferred embodiment of the invention

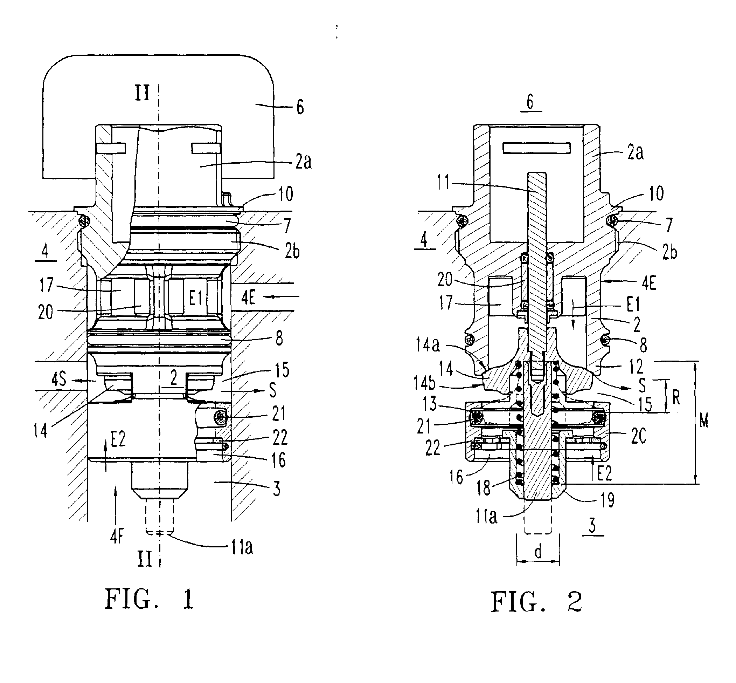

In reference to figures 1-2 an embodiment of the three-way valve 1 has a cylindrically-shaped body structure 2 adapted for its insertion in a vertical housing cavity 3 in a boiler hydraulic block 4, wherefore the valve body 2 is provided with an end part 2a for coupling to a motor 6 or an electromagnetic actuator, two peripheral sealing rings 7,8 separated from each other, and an outer part with an threaded surface 2b. The valve body 2 has peripheral circular flange 10 near its end part 2a, having a larger diameter than the housing cavity 3. The body 2 is inserted into the cavity 3 and the flange 10 stay limiting the insertion depth and facilitates the right positioning of the valve body relative to the cavity 3. For its linear movement the valve stem 11 is coupled to a motor drive mechanism, and the plug member 14 connected to the other end of the stem 11 effects a stroke "R", between a first valve seat 12 and a second seat 13, both formed inside the body 2 of the valve.

The first valve seat 12 corresponds to a first sanitary hot water inlet way "E1", closed when the motor 6 is deenergized, and the second seat 13 corresponds to a second heater circuit inlet way "E2". Either of the two alternative flows "E1" or "E2" are transmitted to a lateral outlet flow "S" from the valve body. The first switchable way "E1" is formed as a series of surface openings 17 distributed over the whole circular profile of the body 2. When the valve body 2 is inserted in the housing 3, one of the openings 17 faces a horizontal duct "4E" in the block 4. The second switchable inlet way "E2" takes the form of a large axial hole 16 that hollows the end 2c of the valve body opposite that of the motor coupling 2a. In addition, through the large hollow 16 formed, the internal parts 11,13,14,18,21,22 of the valve are assembled inside the body 2. The non-switchable way "S" takes the form of a lateral surface opening 15 in relation to the vertical body 2, located between both seats 12, 13, facing a horizontal duct "4S" stemming from the hydraulic block pump body. Both lateral flow through-holes 15,17 are separated from each other in the axial direction, to a sufficient extent for the plug member 14 to be accommodated between the two valve seats 12, 13. In this way, whatever the angular position adopted by the body 2, each of said surface openings 15, 17 faces and stay connected to a respective duct 4E and 4S, regardless of the model of boiler in which the hydraulic block 4 is fitted.

The plug member 14 has two opposed sealing surfaces 14a, 14b. In the valve 1 rest position, under pressure from a return spring 18 coaxial with the stem 11, it keeps the first seat 12 closed. When the motor 6 is energized, the plug member effects said linear stroke "R", opening way E1 of the sanitary circuit and closing way E2 of the heating circuit. Preference is given to a valve construction which has a constant stroke "R" of the plug member 14 of around 8.5 mm, a spring length "M" of around 25 mm and a spring diameter "d" of around 8 mm, in a specimen cylindrical-body valve with a length of 70 mm and a diameter of 31 mm. The seat 12 forms the sealing surface of way "E1" of the sanitary circuit, the opening of which requires fast switching. The mutual contact surfaces 14a of the plug member and the seat 12 form an angled sealing profile in relation to a horizontal plane, in order to achieve a tight seal and at the same time quick lifting of the plug member 14 when the motor 6 is energized. To this end, the metal alloy of the plug member 14 is preferably brass with a lead content, so that it may be machined easily and is wear resistant, and when pressed by the return spring 18 against the first seat 12 its contact surface 14a adapts at the same time to the rigid surface of seat 12. Furthermore when the motor 6 is energized the plug contact surface 14a lifts readily from the seat 12 to make a quick movement without having to overcome the resistance of a force of adhesion to the metal surface of the seat 12.

The heating circuit inlet way "E2" does not require quick opening, so for seat 13 its closure is preferably constructed with a sealing ring 21 housed inside the cylindrical body 2. When motor 6 is energized to open the sanitary circuit inlet way "E1", the surface 14b of the plug member is moved until it presses against the sealing ring 21 of seat 13 in order to shut off the heating circuit inlet way "E2" (represented with a dotted line in FIG. 2).

The stem 11 is guided in its axial movement by means of an inner guide-sleeve 20 in the cylindrical body 2. The stem 11 extends along the other side of the plug member 14 with an axial rod 11a, around which an helicoidal return spring 18 is guided. This rod 11a moves with the plug member 14 compressing the spring 18, and it is guided by means of a guide bush 19 in the large axial hollow 16 in the cylindrical body 2, and attached to the latter with a retaining washer 22 in the same way "E2" of the heating circuit.

## Claims

1. Three-way water valve for switching the two sanitary and heating hot water circuits in a domestic boiler, operated by a motor (6) coupled to a valve stem (11, 11a) and having an outer body (2) of the valve adapted to be assembled in a hydraulic block (4) of the boiler, the switching valve (1) being the plug member (14) type which lifts axially between two transverse valve seats (12, 13), and effecting a stroke (R) between them for changing over the two inlet/outlet ways (E1, E2) in communication with a non-switchable outlet/inlet (S), and a return spring (18) which keeps the plug member (14) pressed against the normally closed (E1) seat (12) of the valve way (E1) corresponding to the sanitary water circuit, the valve body (2) being constructed cylindrical shaped and incorporating said three ways (E1, E2, S) taking the form of superficial openings in the valve body (2), and it is provided with peripheral sealing means (7,8) and body, fixing means (2b,10), so the body (2) is insertable in a cylindrical housing cavity (3) in said hydraulic assembly (4) for direct connection to the three hot water circulating ducts (4E,4F,4S) in the boiler,
wherein said superficial openings (15-17) corresponding to the three valve ways (E1,E2,S) comprise two annular-shaped openings (15,17), extended lateral in relation to the stem (11) and separated from each other in the axial direction, the common switching over way (S) thereof being located between both valve seats (12,13), and a large-diameter axial hole (16) in the end (2c) of the body opposite to the motor coupling one (2a),
**characterised in that** the large-diameter axial hole (16) for the axial inlet/outlet way (E2) is formed in a second end portion (2c) of cylindrical body, through which are assembled internal parts of the valve (11,13,14,18,21,22) including the second valve seat (13) and a stem rod (11a) extended from the plug member (14) running axial along the enlarged hole (16) for guiding the return spring (18) and a support bushing (19) for the spring (16) guiding the movement of the plug member (14).

2. The three-way water valve according to claim 1, wherein said plug member (14) is made of a mouldable alloy not adhesive to one of the metallic valve seat (12) surface, and the plug member (14) is formed of two opposite sealing surfaces (14a,14b), of which the surface (14a) corresponding to the seat (12) normally closed under the force of the return spring (18), has an angled profile in relation to a transverse plane, the same as said seat (12) surface.

## Patentansprüche

1. Dreiweg-Wasserventil zum Umschalten zwischen Brauch- und Heizungsheißwasserkreislauf in einem Haushaltsboiler, angetrieben mit einem Motor (6), der mit einem Ventilschaft (11,11a) verbunden ist und bei dem ein Außenkörper (2) des Ventils so angepasst ist, dass es in einem Hydraulikblock (4) des Boiler eingebaut werden kann, wobei das Umschaltventil (1) vom Typ Stöpselglied (14) ist, das zwischen zwei schrägen Ventilsitzen (12, 13) axial angehoben wird und einen Hub (R) zwischen diesen ausführt, um die beiden mit einem nicht schaltbaren Einlass / Auslass (S) in Kommunikation stehenden Ein-/Auslasswege (E1, E2) umzuschalten, sowie einer Rückholfeder (18), die das Stöpselglied (14) gegen den normalerweise geschlossenen (E1) Sitz (12) des Ventilwegs (E1) gedrückt hält, der dem Brauchwasserkreislauf entspricht, wobei der Ventilkörper (2) zylinderförmig konstruiert ist und diese drei Wege (E1, E2, S) beinhaltet und die Form der Oberflächenöffnungen im Ventilkörper (2) annimmt, versehen mit peripheren Dichtvorrichtungen (7,8) und Vorrichtungen zur Befestigung des Körpers (2b,10), so dass der Körper (2) in einen zylinderförmigen Aufnahmehohlraum (3) in der Hydraulikbaugruppe (4) eingeführt werden kann, um eine direkte Verbindung der drei Leitungen (4E,4F,4S) des Heißwasserkreislaufs im Boiler herzustellen,
wobei diese Oberflächenöffnungen (15-17), die den drei Ventilwegen (E1,E2,S) entsprechen zwei ringförmige Öffnungen (15,17) enthalten, die sich längs am Schaft (11) entlang erstrecken und voneinander in axialer Richtung getrennt sind, wobei sich der gemeinsame Umschaltweg (S) davon zwischen beiden Ventilsitzen (12,13) befindet, sowie ein axiales Loch (16) mit großem Durchmesser am Ende (2c) des Körpers gegenüber der Motorkupplung eins (2a),
**dadurch gekennzeichnet, dass** das axiale Loch (16) mit großem Durchmesser für den axialen Einlass- / Auslassweg (E2) in einem zweiten Endabschnitt (2c) des zylinderförmigen Körpers geformt ist, durch den die Innenteile des Ventils (11,13,14,18,21,22) montiert werden, inklusive des zweiten Ventilsitzes (13) und einer Schaftstange (11a), die sich vom Stöpselglied (14) axial entlang des vergrößerten Lochs (16) erstreckt, um die Rückholfeder (18) und eine Haltemuffe (19) für die Feder (16), die die Bewegungen des Stöpselglieds (14) führt, zu führen.

2. Das Dreiweg-Wasserventil nach Anspruch 1, wobei das Stöpselglied (14) aus einer an einer der Metallflächen des Ventilsitzes (12) nicht haftenden, formbaren Legierung gefertigt ist, und das Stöpselglied (14) aus zwei gegenüber liegenden Dichtungsflächen (14a, 14b) gebildet ist, von denen die Fläche, die (14a) dem Sitz (12) entspricht, der normalerweise unter der Kraft der Rückholfeder (18) geschlossen ist, ein winkelförmiges Profil in Bezug auf eine Querebene besitzt, der gleich ist, wie die Fläche des Sitzes (12).

## Revendications

1. Un robinet d'eau à trois voies pour effectuer la commutation des deux circuits d'eau chaude sanitaire et de chauffage dans une chaudière qui fonctionne avec un moteur (6) couplé à une tige de vanne (11, 11a), un corps extérieur (2) de la vanne étant prévu pour être placé dans un bloc hydraulique (4) de la chaudière, la vanne de commutation (1) étant le type d'élément obturateur (14) qui s'élève de manière axiale entre deux sièges de vanne transversaux (12, 13) et effectue une course (R) entre ces deux sièges pour passer de la voie d'entrée à la voie de sortie (E1, E2) et vice versa, en communication avec une entrée/sortie non commutable (S) et un ressort de rappel (18) qui maintient l'élément obturateur (14) pressé contre le siège (12), qui est normalement fermé (E1), de la voie (E1) de vanne correspondant au circuit d'eau sanitaire, le corps de vanne (2) étant de forme cylindrique et intégrant lesdites trois voies (E1, E2, S) qui ont la forme d'ouvertures superficielles dans le corps de vanne (2), fourni avec des systèmes de scellage périphériques (7,8) et des pièces de fixation (2b,10), de manière à ce que le corps (2) soit insérable dans une cavité de forme cylindrique (3) pratiquée dans ledit assemblage hydraulique (4) pour une connexion directe aux trois conduits de circulation d'eau chaude (4E,4F,4S) placés dans la chaudière,
où lesdites ouvertures superficielles (15-17) correspondent aux trois voies (E1,E2,S) de la vanne, comprennent deux ouvertures de forme annulaire (15,17), qui s'étendent en latérale par rapport à la tige (11) et sont séparées l'une de l'autre dans le sens axial, la commutation habituelle de la voie (S) s'effectuant, par conséquent, entre les deux sièges de vanne (12,13) et un trou axial de grand diamètre (16) à l'extrémité (2c) du corps, à l'opposé de celui couplé (2a) au moteur,
**caractérisé en ce que** le trou axial de grand diamètre (16) de la voie d'entrée/sortie axiale (E2) est formé dans une seconde portion de l'extrémité (2c) du corps cylindrique, au travers duquel sont assemblés des pièces internes de la vanne (11,13,14,18,21,22) y compris le second siège de vanne (13) et une barre (11a) qui s'étend depuis l'élément obturateur (14) et longe le trou élargi (16) de manière axiale pour guider le ressort de rappel (18) et une douille de soutien (19) pour le ressort (16) guidant le mouvement de l'élément obturateur (14).

2. Une vanne d'eau à trois voies selon la revendication 1, où ledit élément obturateur (14) est fabriqué à partir d'un alliage plastique non adhésif à l'une des surfaces du siège de vanne métallique (12) et l'élément obturateur (14) est constitué de deux surfaces de scellage opposées (14a,14b) desquelles, la surface (14a) correspondant au siège (12) qui se referme normalement sous la pression du ressort de rappel (18), est doté d'un profile qui forme un angle par rapport à un plan transversal, le même que la surface dudit siège (12).
